# EUROPEAN PATENT SPECIFICATION

(11) **EP 1 950 942 B1**
(45) Date of publication and mention of the grant of the patent: **14.11.2012**
(21) Application number: 06775638.7
(22) Date of filing: 11.09.2006
(51) Int. Cl.: H04M 7/00, H04M 3/42, H04Q 3/00, H04L 29/06, H04L 29/12

(54) **A SYSTEM OF REALIZING NUMBER PORTABILITY SERVICE AND A METHOD THEREOF**
SYSTEM ZUM REALISIEREN EINES NUMMERNPORTABILITÄTSDIENSTES UND VERFAHREN DAFÜR
SYSTEME PERMETTANT DE METTRE EN OEUVRE UN SERVICE DE PORTABILITE DE NUMERO, ET PROCEDE CORRESPONDANT

(30) Priority: 15.11.2005 CN 200510123222
(43) Date of publication of application: 30.07.2008
(73) Proprietor: Huawei Technologies Co., Ltd., Longgang District, Shenzhen Guangdong 518129 (CN)
(72) Inventor: WANG, Geng, Shenzhen, Guangdong 518129 (CN); ZHU, Fenqin, Shenzhen, Guangdong 518129 (CN); ZHU, Dongming, Shenzhen, Guangdong 518129 (CN)
(74) Representative: Kreuz, Georg Maria
(86) International application number: PCT/CN2006/002336
(87) International publication number: WO 2007/056916

(56) References cited:
- WO-A-02/071674
- CN-A- 1 431 837
- CN-A- 1 649 371
- CN-A- 1 758 634
- US-A1- 2005 111 641
- US-B2- 6 738 633

## Description

### Field of the Invention

The present disclosure relates to the communication field and in particular to a system and method for realizing a number portability service.

### Background of the Invention

The Number Portability (NP) service is also referred to as a service of changing a service provider without changing a phone number, that is, a user may keep an original user number in case of changing a telecommunication operator so as to use the original number for communication with others.

Since the NP service makes it very convenient for the user to change an operator, telecommunication administration bureaus in many countries and regions currently require that network operators shall provide the "number portability" service so as to avoid an inconvenience that the user has to change his number while changing an operator, and thus to avoid that due to the inconvenience, the user gives up changing an operator who provides a higher quality and a more economical service.

The IMS network, which is a core network of the next generation communication network, currently has been a focus of discussion in the industry because it acts as a core session control layer of fixed and mobile network. As specified in the IMS protocol, each IMS user is provided with a private user identifier and at least one public user identifier. The private user identifier is designated by a network operator to which the user is homed, which is used to identify uniquely a subscriber throughout a home network so as to use for aspects of user registration, authorization, management, charging and the like. Since the private user identifier is not used to route an SIP message, no NP problem may occur with the private user identifier. The public user identifier is used as a contact address to communicate with other users, which is analogous to a phone number as referred to in a traditional telecommunication network (for example PSTN). The public user identifier is in a format of SIP URI or Tel URI. As defined in the protocol RFC 3966, the Tel URI may be in a form of "+86 755 12345678", and as defined in the protocol RFC 3261, the SIP URI may be in a form of "sip: alice@OperatorA.com". Since the public user identifier includes routing information, an NP problem may happen to the public user identifier.

The demand for the NP service may still be present in the IMS network, and the user usually wishes not to change the original public identifier of the user due to a change of an operator. For example, a user of an operator A (with a public user identifier of sip: alice@OperatorA.com) usually tends to keep the contact address (alice@OperatorA.com) when he changes the operator from A to B for a service, otherwise he would have to inform his colleagues, friends, families and the like, one by one.

In accordance with a routing rule of the IMS, only a public user identifier allocated for a user by an operator to which the user is currently homed is used for routing, and upon a change of the operator for the user, a user public identifier (e.g., alice@OperatorB.com) has to be allocated newly for the user, otherwise a call intended for the user would be routed to the previous operator of the user if the public user identifier allocated by the previous operator were used without any specific processing. As described in the protocol RFC 3482, a call may be switched eventually to the called user only if a data base necessarily present in the calling network or the previous operator network of the user is adapted to convert the old address of the user (the user public identifier allocated by the operator to which the user was previously homed) into the new address of the user (the user public identifier allocated by the operator to which the user is currently homed) or other equivalent routing information. This data base is referred to as a Number Portability Data Base (NPDB).

The DIAMETER redirecting function is a concept of the IMS network. There may be a plurality of HSSs in an IMS network for storing different user related data, and the data of a user may be located in any one of the HSSs. Upon sending of a session request to the user, the DIAMETER redirecting function may be useful when there is a need to know in which HSS the user data is located. Specifically, an I-CSCF firstly sends a query command to an SLF, and the SLF determines an HSS where the user is located and then notifies the I-CSCF about the HSS where the user is located, so that the I-CSCF may query the proper HSS about the user data. In this process, the DIAMETER redirecting function is adopted to notify, by the SLF, the I-CSCF about which HSS is to be queried about the user data.

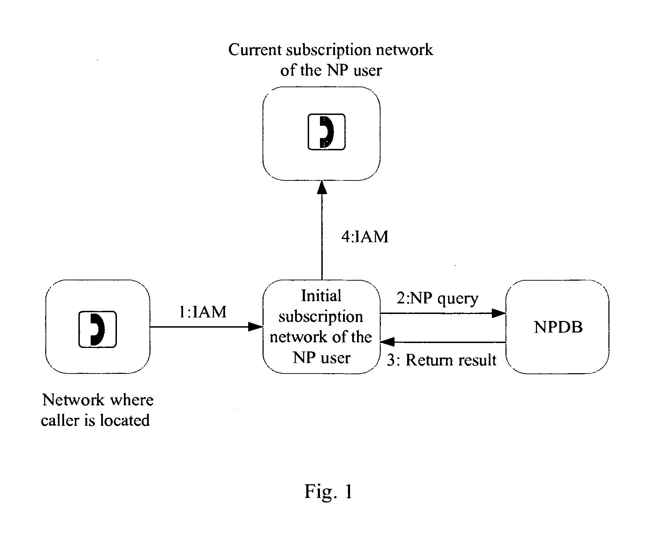

Current NP solutions mostly are NP solutions for a circuit domain CS network as described in the RFC 3482, one of which is Onward Routing (OR) as illustrated in Fig. 1, including the following steps:
1. When a call occurs (the callee of the call is an NP user), a network where the caller is located routes the call to an initial subscription network of the NP user in accordance with a default routing rule.
2-3. The initial subscription network of the NP user queries an NPDB for NP address conversion so as to obtain new routing information.
4. Eventually, the call is routed to a current subscription network of the NP user.

The above flow is designed for the circuit domain network, and since the IMS network differs greatly in the essential architecture from the traditional circuit domain network, the current NP solutions may not meet the requirements of the IMS network, especially in a signaling process and a bearer establishing approach.

The IMS is based on SIP signaling. When the caller initiates a session request to the initial subscription network of the NP user, the initial subscription network of the NP user may not only forward the session request to the current subscription network of the NP user but also send a redirecting message to the network where the caller is located, so that the calling network sends the session request to the current subscription network of the NP user. Consequently, the signaling process of the NP service in the circuit domain is not as flexible as that in the IMS network.

In terms of a bearer establishing approach, in the IMS, a bearer between the caller and the callee may be established directly between the networks where the caller and the callee are located, instead of being tandemed (i.e., relayed) through the initial subscription network of the NP user, and consequently the circuit domain network is inferior to the IMS network in terms of efficiency of using the bearer resource in processing of the NP service.

In summary, a significant drawback of the current IMS system for application services is the absence of a number portability mechanism in the IMS system.
WO 02/071674A, introduces a user distribution Server (UDS), the UDS is provided in a network having multiple servers and users who are identified by a plurality of different use identifies. When the SLF is used as an UDS, the SLF receives an INVITE MESSAGE from an I-CSCF, and communicates with a portability database for obtaining the identifier to be used for contacting the user. Then the SLF answers to the I-CSCF with an address or URL for reaching the subscriber. The I-CSCF may redirect the INVITE MESSAGE to the network where the user has been ported.
"Additions to the SLF Approach" (S2-010794, Siemens AG., 01.03.2001) describes the resolution mechanism, which enables the I-CSCF to find the address of the HSS when multiple and separately addressable HSSs have been deployed by a network operator. To get the HSS address, the I-CSCF queries the SLF, and the SLF responds with the HSS address to the I-CSCF, thus the I-CSCF can proceed by querying the appropriate HSS.

### Summary of the Invention

The present disclosure provides a system and method for realizing a number portability service and a subscription locating function to address the problem of absence of a number portability mechanism in an existing IMS system.

The system for realizing a number portability service according to the present disclosure includes a Number Portability Data Base (NPDB) adapted to store a correspondence relationship between an identifier allocated by an initial subscription network of a called user and an identifier allocated by a current subscription network of the user; and

a Subscription Locating Function (SLF) adapted to query the NPDB correspondingly about the identifier allocated by the current subscription network of the called user dependent on identifier information in a session request so as to locate a Home Subscriber Server, HSS, wherein the session request is transmitted to the SLF by the I-CSCF, the identifier information comprises the identifier allocated by the initial subscription network of the called user.
wherein the SLF and the HSS are managed jointly, the HSS to which the called user is currently homed and the SLF are not in the same network, and the SLF is homed to the initial subscription network of the called user;

the SLF, further adapted to redirect the identifier allocated by the current subscription network of the called user to the I-CSCF;

wherein the system further comprises an Interrogating-Call Session Control Function, I-CSCF; the I-CSCF, further adapted to query the HSS about the called user information dependent on the identifier allocated by the current subscription network of the called user carried in the redirect message, receive the called user subscriber information from the HSS, wherein the called user information comprises a Serving-Call Session Control Function, S-CSCF, to which the called user is currently homed, and forward the session request directly to the S-CSCF so as to accomplish session routing.

The SLF includes a query module adapted to interact with the NPDB to query about the identifier allocated by the current subscription network of the called user.

The NPDB is disposed in or independent of the SLF.

If the NPDB is disposed in the SLF, then a private interface is adopted between the query module and the NPDB.

The NPDB is disposed in a Service Control Point (SCP). The query module is connected with the NPDB via a CAP interface through an IM-SSF module.

The NPDB is a Domain Name Server (DNS).

Both the initial subscription network of the called user and the current subscription network of the user are IMS networks. The identifier allocated by the initial subscription network of the called user is registered in the current subscription network of the user.

The method according to the present disclosure includes the steps of:

A. querying, by an SLF, correspondingly about an identifier allocated by a current subscription network of a called user dependent on identifier information in a received session request, wherein the session request is transmitted to the SLF by an Interrogating-Call Session Control Function, I-CSCF(Step S2), the identifier information comprises an identifier allocated by an initial subscription network of the called user; and

B. redirecting, by the SLF, the identifier allocated by the current subscription network of the called user to the I-CSCF;
querying, by the I-CSCF, a Home Subscriber Server, HSS, about the called user subscriber information dependent on the identifier allocated by the current subscription network of the called user,wherein the SLF and the HSS are managed jointly, the HSS to which the called user is currently homed and the SLF are not in the same network, and the SLF is homed to the initial subscription network of the called user;
receiving, by the I-CSCF, the called user subscriber information from the HSS, wherein the called user information comprises a Serving-Call Session Control Function, S-CSCF, to which the called user is currently homed; and
forwarding, by the I-CSCF, the session request directly to the S-CSCF so as to accomplish session routing.

Both the initial subscription network of the called user and the current subscription network of the user are IMS networks.

The identifier allocated by the initial subscription network of the called user is registered in the current subscription network of the user.

The step A includes the steps of: forwarding, by an Interrogating-Call Session Control Function, I-CSCF, in the initial subscription network of the called user, the received session request to the SLF; querying, by the SLF, an NPDB, correspondingly about the identifier allocated by the current subscription network of the user dependent on the identifier information in the session request; and returning, by the NPDB, a query result to the SLF.

The present disclosure has the following advantageous effects.

The present disclosure adds a query module in the existing SLF and enables the query module to interact with the NPDB to query the identifier allocated by the current subscription network of the user, and then issues the obtained identifier allocated by the current subscription network of the user to the I-CSCF through the redirecting mechanism, so that the I-CSCF may properly locate the HSS storing subscription information of the user. In this way, the NP service is realized in the IMS system.

The present disclosure further provides a method for realizing a number portability service.

Based on the IMS prescribed architecture, the present disclosure may not only realize the NP function in the IMS but also combine the realization with the existing IMS handling mechanism as much as possible so that operators may easily add the NP function on existing devices. Therefore, the present disclosure has significant advantages of feasibility.

### Brief Description of the Drawings

Figure 1 is a schematic diagram of a structure of a circuit domain number portability system;

Figure 2 is a schematic diagram of a structure of a system according to the present disclosure;

Figure 3 is a schematic diagram of a structure of a subscription locating function according to the present disclosure;

Figure 4 is a flow chart of steps in a method according to the present disclosure; and

Figure 5 is a flow chart of signaling in the method according to the present disclosure.

### Detailed Description of the Invention

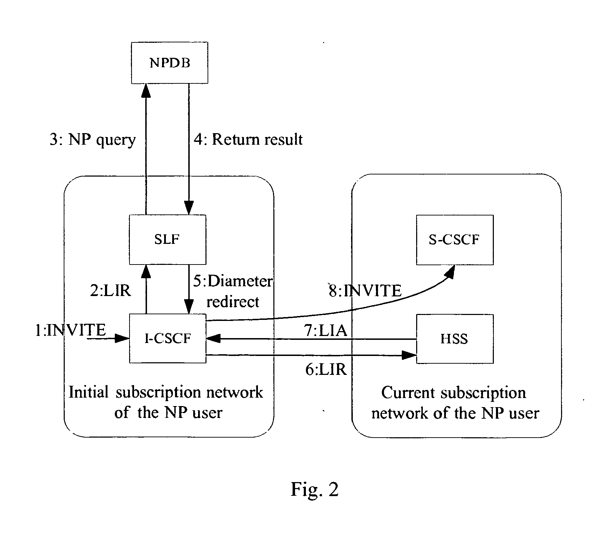

In order to enable an IMS system to provide a Number Portability (NP) service, the present disclosure provides a system for realizing a number portability service as illustrated in Figure 2, which includes an IMS network with which an NP user initially subscribes and an IMS network with which the user currently subscribes.

The initial subscription network of the NP user includes an I-CSCF, an SLF and an NPDB connected sequentially.

The current subscription network of the NP user includes an S-CSCF and an HSS.

The SLF and the HSS are managed jointly so as to enable the SLF to be located to the corresponding HSS.

The I-CSCF is adapted to transmit a session request to the SLF upon reception of the session request and query the corresponding HSS about called user information dependent on identifier information redirected by the SLF.

The SLF is adapted to receive the session request from the I-CSCF, and query the NPDB correspondingly about an identifier allocated by the current subscription network of the called user dependent on identifier information in the session request by means of a query module built-in the SLF, and redirects the obtained identifier information to the I-CSCF.

The NPDB stores a correspondence relationship between an identifier allocated by the initial subscription network of the called user and the identifier allocated by the current subscription network of the called user so as to be queried by the query module. The NPDB may be disposed in the SLF or a Service Control Point (SCP). Since a Domain Name Server (DNS) may record a correspondence relationship between new and old public user identifiers, the DNS may also function as the NPDB. If the NPDB is disposed in the SLF, then the query module and the NPDB may interact via a private interface, and if the NPDB is disposed in the SCP, then the query module may be connected with the NPDB via a CAP interface through an IM-SSF module.

The HSS is adapted to store current subscriber information of the called user so as to query by the I-CSCF.

The S-CSCF is adapted to receive the session request from the I-CSCF, thereby accomplishing session routing.

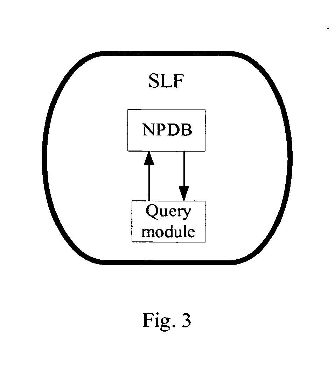

In correspondence with the above system, the present disclosure provides an SLF as illustrated in Figure 3. The SLF includes a query module and further possibly includes an NPDB.

The query module is adapted to query about the identifier allocated by the current subscription network of the called user.

The NPDB stores the correspondence relationship between the identifier allocated by the initial subscription network of the called user and the identifier allocated by the current subscription network of the called user.

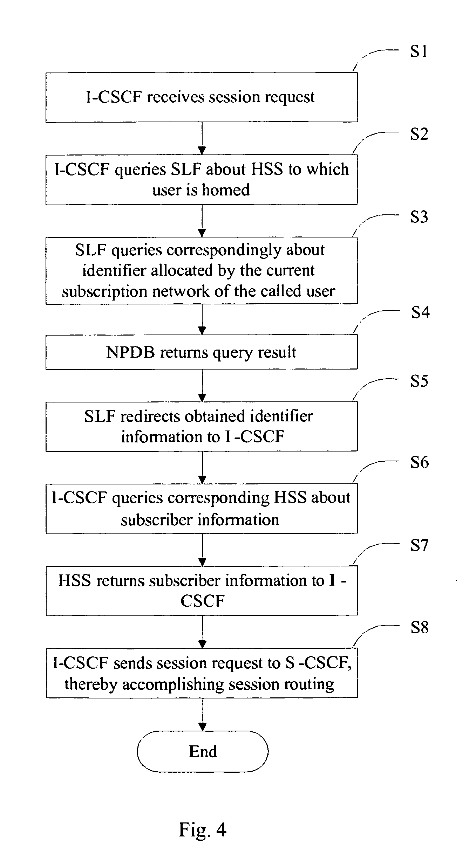

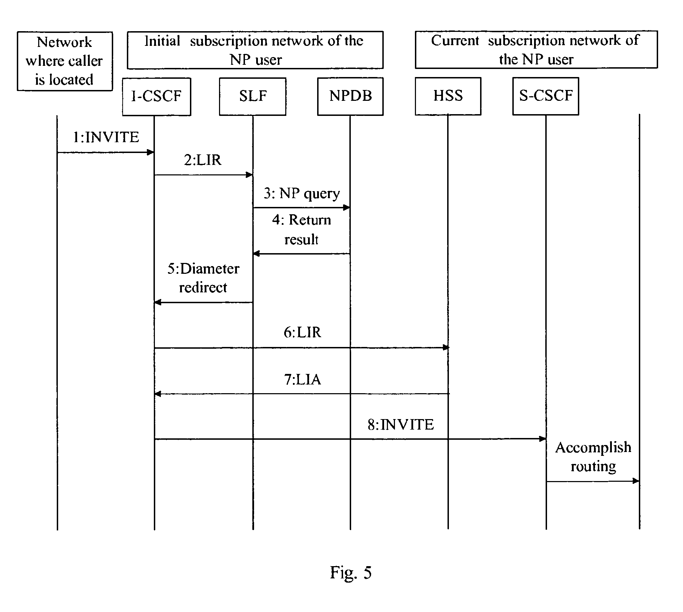

With the above system and device, the present disclosure provides a method for realizing a number portability service as illustrated in Figure 4 and Figure 5. The method includes the following specific steps (some minor messages, such as 180 and 100, are omitted in Figure 5 for highlighting a primary flow).
S1. The I-CSCF receives a session request.
S2. The I-CSCF queries the SLF about the HSS to which the user is homed.
S3. The SLF queries the NPDB correspondingly about the identifier allocated by the current subscription network of the called user dependent on the identifier information in the session request.
S4. The NPDB returns a query result.
S5. The SLF redirects the obtained identifier information to the I-CSCF.
S6. The I-CSCF queries the corresponding HSS about the user information.
S7. The HSS returns the user information to the I-CSCF.
S8. The I-CSCF sends the session request to the S-CSCF, thereby accomplishing session routing.

The method according to the present disclosure will be described in details below by way of two examples.

A called user that changes a subscription from an IMS operator A to an IMS operator B is taken as an example.

S101. The I-CSCF receives a session request.

When a calling user sends a session request to an NP user, the session request is to be routed to the I-CSCF in the network to which the NP user initially subscribes (the operator A) in accordance with a default routing rule.

S 102. The I-CSCF queries the SLF about the HSS to which the user is homed.

The I-CSCF queries the SLF about the HSS to which the called user is possibly homed upon reception of the session request.

S103. The SLF queries the NPDB correspondingly about an identifier allocated by the current subscription network of the called user dependent on identifier information in the session request.

The SLF obtains the identifier information of the called user from the session request forwarded from the I-CSCF, i.e., an identifier allocated by the initial subscription network of the NP user, and interacts with the NPDB through the query module built in the SLF to query an identifier allocated by the current subscription network of the user (the operator B).

S 104. The NPDB returns a query result.

The NPDB queries about the identifier allocated by the current subscription network of the NP user in accordance with a stored correspondence relationship between the identifier allocated by the initial subscription network of the called user and the identifier allocated by the current subscription network of the user. After that, the obtained identifier information is carried by a query result and the query result is returned to the SLF.

S 105. The SLF redirects the obtained identifier information to the I-CSCF.

After the SLF receives the query result, the SLF obtains the identifier allocated by the current subscription network of the NP user from the query result and compares the obtained identifier allocated by the current subscription network of the NP user with the identifier allocated by the initial subscription network of the user to determine whether the user is an NP user (in this example, the user changes the subscription from the operator A to the operator B and therefore is an NP user).

The SLF sends to the I-CSCF a redirecting message carrying the identifier allocated by the current subscription network of the NP user.

S106. The I-CSCF queries the corresponding HSS about subscriber information.

Since the SLF and the HSS according to the present disclosure are managed jointly, the identifier allocated by the current subscription network of the NP user necessarily points to the HSS to which the NP user is currently homed (the HSS is in the network of the operator B), and thus the I-CSCF may query the corresponding HSS about the subscriber information in accordance with the identifier allocated by the current subscription network of the NP user.

S 107. The HSS returns the subscriber information to the I-CSCF.

After querying, the HSS returns the subscriber information to the I-CSCF. The subscriber information includes an S-CSCF to which the user is currently homed (if the user has not been allocated with any S-CSCF, then an S-CSCF in the current subscription network of the user is allocated for the user in accordance with the existing IMS protocol).

S108. The I-CSCF sends the session request to the S-CSCF, thereby accomplishing session routing.

The I-CSCF enables the identifier allocated by the initial subscription network of the NP user to be carried by the session request (an INVITE message), that is, forwarding the session request sent from the calling side directly to the S-CSCF, and the I-CSCF also enable the identifier allocated by the initial subscription network of the NP user to be registered in the current subscription network of the user, so that the S-CSCF routes the session request to the NP user, thereby accomplishing session routing.

Example 2 for the method takes that a called user does not change any subscription network as an example in order to embody generality of the present disclosure in combination with the system and device according to the present disclosure.

S201. The I-CSCF receives a session request.

When a calling user sends a session request to a user, the session request will be routed to the I-CSCF in the network which the called user initially subscribes in accordance with a default routing rule.

S202. The I-CSCF queries the SLF about the HSS to which the user is homed.

After receiving the session request, the I-CSCF queries the SLF about the HSS to which the called user is possibly homed.

S203. The SLF queries the NPDB correspondingly about an identifier allocated by the current subscription network of the called user dependent on identifier information in the session request.

The SLF obtains the identifier information of the called user from the session request forwarded from the I-CSCF, that is, an identifier allocated by the initial subscription network of the called user, and interacts with the NPDB through the query module built in the SLF to query an identifier allocated by the current subscription network of the user.

S204. The NPDB returns a query result.

The NPDB queries about the identifier allocated by the current subscription network of the NP user in accordance with a stored correspondence relationship between the identifier allocated by the initial subscription network of the called user and the identifier allocated by the current subscription network of the user, and after querying, the obtained identifier information is carried by a query result and the query result is returned to the SLF.

S205. The SLF redirects the obtained identifier information to the I-CSCF.

After receiving the query result, the SLF obtains the identifier allocated by the current subscription network of the called user from the query result and compares the obtained identifier allocated by the current subscription network of the called user with the identifier allocated by the initial subscription network of the user to determine whether the user is an NP user. In this example, the user does not change any subscription network (that is, the identifier allocated by the current subscription network of the called user is the identifier allocated by the initial subscription network of the user) and therefore is not an NP user.

The SLF sends to the I-CSCF a redirecting message carrying the identifier allocated by the current subscription network of the called user.

S206. The I-CSCF queries the corresponding HSS about subscriber information.

Since the SLF and the HSS according to the present disclosure are managed jointly (in this example, the SLF and the HSS are in the same network), the identifier allocated by the current subscription network of the called user will necessarily point to the HSS to which the called user is currently homed, and thus the I-CSCF may query the corresponding HSS about the subscriber information in accordance with the identifier allocated by the current subscription network of the called user.

S207. The HSS returns the subscriber information to the I-CSCF.

After querying, the HSS returns the subscriber information to the I-CSCF. The subscriber information includes the S-CSCF to which the user is currently homed (if the user has not been allocated with any S-CSCF, then an S-CSCF in the current subscription network of the user is allocated for the user in accordance with the existing IMS protocol).

S208. The I-CSCF sends the session request to the S-CSCF, thereby accomplishing session routing.

The I-CSCF enables the identifier allocated by the initial subscription network of the called user to be carried in the session request (an INVITE message), that is, forwarding the session request sent from the calling side directly to the S-CSCF, and the I-CSCF also enable the identifier allocated by the initial subscription network of the called user to be registered in the current subscription network of the user, so that the S-CSCF routes the session request to the called user, thereby accomplishing session routing.

Evidently, those skilled in the art may make numerous modifications and variations to the present disclosure without departing from the scope of the present disclosure, and thus the present disclosure is also intended to encompass these modifications and variations to the present disclosure provided the modifications and variations fall within the scope of the claims appended to the present disclosure.

## Claims

1. A system for realizing a number portability service, comprising a Number Portability Data Base, NPDB, adapted to store a correspondence relationship between an identifier allocated by an initial subscription network of a called user and an identifier allocated by a current subscription network of the called user;
wherein the system further comprises: a Subscription Locating Function, SLF, and an Interrogating-Call Session Control Function, I-CSCF;
the SLF, adapted to query the NPDB about the identifier allocated by the current subscription network of the called user dependent on identifier information in a session request so as to locate a Home Subscriber Server, HSS, wherein the session request is transmitted to the SLF by the I-CSCF, the identifier information comprises the identifier allocated by the initial subscription network of the called user;
**characterized in that**,
the SLF and the HSS are managed jointly, the HSS to which the called user is currently homed and the SLF are not in the same network, and the SLF is homed to the initial subscription network of the called user;the SLF is further adapted to redirect the identifier allocated by the current subscription network of the called user to the I-CSCF;
the I-CSCF is further adapted to query the HSS about the called user subscriber information dependent on the identifier allocated by the current subscription network of the called user carried in the redirect message, receive the called user subscriber information from the HSS, wherein the called user information comprises a Serving-Call Session Control Function, S-CSCF, to which the called user is currently homed, and forward the session request directly to the S-CSCF so as to accomplish session routing.

2. The system according to claim 1, wherein the SLF comprises a query module adapted to interact with the NPDB to query about the identifier allocated by the current subscription network of the called user.

3. The system according to claim 2, wherein the NPDB is disposed in or independent of the SLF.

4. The system according to claim 3, wherein if the NPDB is disposed in the SLF, a private interface is adopted between the query module and the NPDB.

5. The system according to claim 2, wherein the NPDB is disposed in a Service Control Point, SCP.

6. The system according to claim 5, wherein the query module is connected with the NPDB via a CAP interface through an IM-SSF module.

7. The system according to claim 2, wherein the NPDB is a Domain Name Server, DNS.

8. The system according to claim 2, wherein both the initial subscription network of the called user and the current subscription network of the called user are IMS networks.

9. The system according to any one of claim 8, wherein the identifier allocated by the initial subscription network of the called user is registered in the current subscription network of the called user.

10. A method for realizing a number portability service, comprising the steps of:
A. querying, by an SLF, a Number Partability Data Base, NPDB, about an identifier allocated by a current subscription network of a called user dependent on identifier information in a received session request (Step S3), wherein the session request is transmitted to the SLF by an Interrogating-Call Session Control Function, I-CSCF (Step S2), the identifier information comprises an identifier allocated by an initial subscription network of the called user; **characterized by**,
B. redirecting, by the SLF, the identifier allocated by the current subscription network of the called user to the I-CSCF (Step S5),;
querying, by the I-CSCF, a Home Subscriber Server, HSS, about the called user subscriber information dependent on the identifier allocated by the current subscription network of the called user (Step S6), wherein the SLF and the HSS are managed jointly, the HSS to which the called user is currently homed and the SLF are not in the same network, and the SLF is homed to the initial subscription network of the called user;receiving, by the I-CSCF, the called user subscriber information from the HSS (Step S7), wherein the called user information comprises a Serving-Call Session Control Function, S-CSCF, to which the called user is currently homed; and
forwarding, by the I-CSCF, the session request directly to the S-CSCF so as to accomplish session routing (Step S8).

11. The method according to claim 10, wherein both the initial subscription network of the called user and the current subscription network of the called user are IMS networks.

12. The method according to claim 10 or 11, wherein the identifier allocated by the initial subscription network of the called user is registered in the current subscription network of the called user.

13. The method according to claim 12, wherein the step A comprises the steps of:
forwarding, by the I-CSCF in the initial subscription network of the called user, the received session request to the SLF(Step S2);
querying, by the SLF, the Number Portability Data Base (NPDB) about the identifier allocated by the current subscription network of the called user dependent on the identifier information in the session request(Step S3); and
returning, by the NPDB, a query result to the SLF(Step S4).

## Patentansprüche

1. System zur Realisierung eines Rufnummemportabilitätsdienstes, wobei das System eine Rufnummernportabilitäts-Datenbank, NPDB, umfasst, die dafür ausgelegt ist, eine Korrespondenzbeziehung zwischen einer Kennung, die durch ein anfängliches Anmeldenetz eines angerufenen Teilnehmers zugewiesen worden ist, und einer Kennung, die durch ein gegenwärtiges Anmeldenetz des angerufenen Teilnehmers zugewiesen worden ist, zu speichern;
wobei das System ferner Folgendes umfasst: eine Anmeldungsermittlungsfunktion, SLF, und eine Sitzungssteuerfunktion des abfragenden Anrufs, I-CSCF;
wobei die SLF zum Abfragen der NPDB bezüglich der Kennung, die durch das gegenwärtige Anmeldenetz des angerufenen Teilnehmers zugewiesen worden ist, in Abhängigkeit von Kennungsinformationen in einer Sitzungsanforderung ausgelegt ist, um einen Heimatteilnehmer-Server, HSS, zu ermitteln, wobei die Sitzungsanforderung durch die I-CSCF an die SLF gesendet wird, wobei die Kennungsinformationen die Kennung umfassen, die durch das anfängliche Anmeldenetz des angerufenen Teilnehmers zugewiesen worden ist;
**dadurch gekennzeichnet, dass**
die SLF und der HSS gemeinsam gemanagt werden, wobei sich der HSS, von dem der angerufene Teilnehmer gegenwärtig versorgt wird, und die SLF nicht in demselben Netz befinden und die SLF durch das anfängliche Anmeldenetz des angerufenen Teilnehmers versorgt wird; wobei die SLF ferner zum Umleiten der Kennung, die durch das gegenwärtige Anmeldenetz des angerufenen Teilnehmers zugewiesen worden ist, zu der I-CSCF ausgelegt ist;
wobei die I-CSCF ferner zum Abfragen des HSS bezüglich der Teilnehmerinformationen des angerufenen Teilnehmers in Abhängigkeit von der Kennung, die durch das gegenwärtige Anmeldenetz des angerufenen Teilnehmers zugewiesen worden ist, die in der Umleitungsnachricht geführt wird, zum Empfangen der Teilnehmerinformationen des angerufenen Teilnehmers von dem HSS, wobei die Informationen des angerufenen Teilnehmers eine Sitzungssteuerfunktion des Abnehmeranrufs S-CSCF umfassen, von der der angerufene Teilnehmer gegenwärtig versorgt wird, und zum Weiterleiten der Sitzungsanforderung direkt an die S-CSCF, um das Sitzungs-Routing auszuführen, ausgelegt ist.

2. System nach Anspruch 1, wobei die SLF ein Abfragemodul umfasst, das so ausgelegt ist, dass es mit der NPDB in Wechselwirkung tritt, um sie bezüglich der Kennung abzufragen, die durch das gegenwärtige Anmeldenetz des angerufenen Teilnehmers zugewiesen worden ist.

3. System nach Anspruch 2, wobei die NPDB in der oder unabhängig von der SLF angeordnet ist.

4. System nach Anspruch 3, wobei zwischen dem Abfragemodul und der NPDB eine private Schnittstelle angenommen wird, falls die NPDB in der SLF angeordnet ist.

5. System nach Anspruch 2, wobei die NPDB in einem Dienstesteuerungspunkt, SCP, angeordnet ist.

6. System nach Anspruch 5, wobei das Abfragemodul über eine CAP-Schnittstelle über ein IM-SSF-Modul mit der NPDB verbunden ist.

7. System nach Anspruch 2, wobei die NPDB ein Domänennamen-Server DNS ist.

8. System nach Anspruch 2, wobei sowohl das anfängliche Anmeldenetz des angerufenen Teilnehmers als auch das gegenwärtige Anmeldenetz des angerufenen Teilnehmers IMS-Netze sind.

9. System nach einem der Ansprüche 8, wobei die Kennung, die durch das anfängliche Anmeldenetz des angerufenen Nutzers zugewiesen worden ist, in dem gegenwärtigen Anmeldenetz des angerufenen Teilnehmers registriert worden ist.

10. Verfahren zur Verwirklichung eines Rufnummemportabilitätsdienstes, wobei das Verfahren die folgenden Schritte umfasst:
A. Abfragen einer Rufnummernportabilitäts-Datenbank, NPDB, bezüglich einer Kennung, die durch ein gegenwärtiges Anmeldenetz eines angerufenen Teilnehmers zugewiesen worden ist, durch eine SLF in Abhängigkeit von Kennungsinformationen in einer empfangenen Sitzungsanforderung (Schritt S3), wobei die Sitzungsanforderung durch eine Sitzungssteuerfunktion des abfragenden Anrufs I-CSCF an die SLF gesendet wird (Schritt S2), wobei die Kennungsinformationen eine Kennung umfassen, die durch ein anfängliches Anmeldenetz des angerufenen Teilnehmers zugewiesen worden ist; **gekennzeichnet durch**
B. Umleiten der Kennung, die **durch** das gegenwärtige Anmeldenetz des angerufenen Teilnehmers zugewiesen worden ist, zu der I-CSCF **durch** die SLF (Schritt S5); Abfragen eines Heimatteilnehmer-Servers, HSS, bezüglich der Teilnehmerinformationen des angerufenen Teilnehmers in Abhängigkeit von der Kennung, die **durch** das gegenwärtige Anmeldenetz des angerufenen Teilnehmers zugewiesen worden ist, **durch** die I-CSCF (Schritt S6), wobei die SLF und der HSS zusammen gemanagt werden, wobei sich der HSS, von dem der angerufene Teilnehmer gegenwärtig versorgt wird, und die SLF nicht in demselben Netz befinden, wobei die SLF von dem anfänglichen Anmeldenetz des angerufenen Teilnehmers versorgt wird; Empfangen der Teilnehmerinformationen des angerufenen Teilnehmers von dem HSS **durch** die I-CSCF (Schritt S7), wobei die Informationen des angerufenen Teilnehmers eine Sitzungssteuerfunktion des Abnehmeranrufs S-CSCF umfassen, von der der angerufene Teilnehmer gegenwärtig versorgt wird; und
Weiterleiten der Sitzungsanforderung direkt an die S-CSCF, um ein Sitzungs-Routing auszuführen, **durch** die I-CSCF (Schritt S8).

11. Verfahren nach Anspruch 10, wobei sowohl das anfängliche Anmeldenetz des angerufenen Teilnehmers als auch das gegenwärtige Anmeldenetz des angerufenen Teilnehmers IMS-Netze sind.

12. Verfahren nach Anspruch 10 oder 11, wobei die Kennung, die durch das anfängliche Anmeldenetz des angerufenen Teilnehmers zugewiesen worden ist, in dem gegenwärtigen Anmeldenetz des angerufenen Teilnehmers registriert wird.

13. Verfahren nach Anspruch 12, wobei der Schritt A die folgenden Schritte umfasst:
Weiterleiten der empfangenen Sitzungsanforderung an die SLF durch die I-CSCF in dem anfänglichen Anmeldenetz des angerufenen Teilnehmers (Schritt 2);
Abfragen der Rufnummernportabilitäts-Datenbank (NPDB) bezüglich der Kennung, die durch das gegenwärtige Anmeldenetz des angerufenen Teilnehmers zugewiesen worden ist, in Abhängigkeit von den Kennungsinformationen in der Sitzungsanforderung durch die SLF (Schritt S3); und
Zurückgeben eines Abfrageergebnisses an die SLF durch die NPDB (Schritt S4).

## Revendications

1. Système de réalisation d'un service de portabilité de numéros, comprenant une Base de Données de Portabilité de Numéros, NPDB, adaptée pour mémoriser une relation de correspondance entre un identifiant attribué par un réseau d'abonnement initial d'un usager appelé et un identifiant attribué par un réseau d'abonnement courant de l'usager appelé ;
le système comprenant en outre : une Fonction de Localisation d'Abonnement, SLF, et une Fonction de Commande de Session d'Appel Interrogatrice, I-CSCF ;
la SLF, adaptée pour interroger la NPDB au sujet de l'identifiant attribué par le réseau d'abonnement courant de l'usager appelé en fonction d'une information d'identifiant dans une requête de session de façon à localiser un Serveur d'Abonnés de Rattachement, HSS, la requête de session étant transmise à la SLF par l'I-CSCF, l'information d'identifiant comprenant l'identifiant attribué par le réseau d'abonnement initial de l'usager appelé ;
**caractérisé en ce que**,
la SLF et le HSS sont gérés conjointement, le HSS auquel l'usager appelé est couramment rattaché et la SLF ne se trouvent pas dans le même réseau, et la SLF étant rattachée au réseau d'abonnement initial de l'usager appelé ; la SLF étant adaptée en outre pour rediriger l'identifiant attribué par le réseau d'abonnement courant de l'usager appelé à l'I-CSCF ;
l'I-CSCF est adaptée en outre pour interroger le HSS au sujet de l'information d'abonné de l'usager appelé en fonction de l'identifiant attribué par le réseau d'abonnement courant de l'usager appelé inclus dans le message de redirection, recevoir l'information d'abonné de l'usager appelé depuis le HSS, l'information d'usager appelé comprenant une Fonction de Commande de Session d'Appel de Desserte, S-CSCF, à laquelle l'usager appelé est couramment rattaché, et acheminer la requête de session directement jusqu'à la S-CSCF de façon à réaliser le routage de la session.

2. Système selon la revendication 1, dans lequel la SLF comprend un module d'interrogation adapté pour interagir avec la NPDB afin de rechercher l'identifiant attribué par le réseau d'abonnement courant de l'usager appelé.

3. Système selon la revendication 2, dans lequel la NPDB est disposée dans la SLF ou indépendante de celle-ci.

4. Système selon la revendication 3, dans lequel si la NPDB est disposée dans la SLF, une interface privée est adoptée entre le module d'interrogation et la NPDB.

5. Système selon la revendication 2, dans lequel la NPDB est disposée dans un Point de Commande de Service, SCP.

6. Système selon la revendication 5, dans lequel le module d'interrogation est connecté à la NPDB par l'intermédiaire d'une interface CAP par le biais d'un module IM-SSF.

7. Système selon la revendication 2, dans lequel la NPDB est un Serveur de Noms de Domaine, DNS.

8. Système selon la revendication 2, dans lequel à la fois le réseau d'abonnement initial de l'usager appelé et le réseau d'abonnement courant de l'usager appelé sont des réseaux IMS.

9. Système selon l'une quelconque des revendications 8, dans lequel l'identifiant attribué par le réseau d'abonnement initial de l'usager appelé est enregistré dans le réseau d'abonnement courant de l'usager appelé.

10. Procédé de réalisation d'un service de portabilité de numéros, comprenant les étapes suivantes :
A. l'interrogation, par une SLF, d'une Base de Données de Portabilité de Numéros, NPDB, au sujet d'un identifiant attribué par un réseau d'abonnement courant d'un usager appelé en fonction d'une information d'identifiant dans une requête de session reçue (Etape S3), la requête de session étant transmise à la SLF par une Fonction de Commande de Session d'Appel Interrogatrice, I-CSCF (Etape S2), l'information d'identifiant comprenant un identifiant attribué par un réseau d'abonnement initial de l'usager appelé ; **caractérisé par**,
B. la redirection, par la SLF, de l'identifiant attribué par le réseau d'abonnement courant de l'usager appelé vers l'I-CSCF (Etape S5) ;
l'interrogation, par l'I-CSCF, d'un Serveur d'Abonnés de Rattachement, HSS, au sujet de l'information d'abonné de l'usager appelé en fonction de l'identifiant attribué par le réseau d'abonnement courant de l'usager appelé (Etape S6), la SLF et le HSS étant gérés conjointement, le HSS auquel l'usager appelé est couramment rattaché et la SLF ne se trouvant pas dans le même réseau, et la SLF étant rattachée au réseau d'abonnement initial de l'usager appelé ; la réception, par l'I-CSCF, de l'information d'abonné de l'usager appelé depuis le HSS (Etape S7), l'information d'usager appelé comprenant une Fonction de Commande de Session d'Appel de Desserte, S-CSCF, à laquelle l'usager appelé est couramment rattaché ; et
l'acheminement, par l'I-CSCF, de la requête de session directement à la S-CSCF de façon à réaliser le routage de la session (Etape S8).

11. Procédé selon la revendication 10, dans lequel à la fois le réseau d'abonnement initial de l'usager appelé et le réseau d'abonnement courant de l'usager appelé sont des réseaux IMS.

12. Procédé selon la revendication 10 ou 11, dans lequel l'identifiant attribué par le réseau d'abonnement initial de l'usager appelé est enregistré dans le réseau d'abonnement courant de l'usager appelé.

13. Procédé selon la revendication 12, dans lequel l'étape A comprend les étapes suivantes :
l'acheminement, par l'I-CSCF dans le réseau d'abonnement initial de l'usager appelé, de la requête de session reçue jusqu'à la SLF (Etape S2) ;
l'interrogation, par la SLF, de la Base de Données de Portabilité de Numéros (NPDB) au sujet de l'identifiant attribué par le réseau d'abonnement courant de l'usager appelé en fonction de l'information d'identifiant dans la requête de session (Etape S3) ; et
le renvoi, par la NPDB, d'un résultat d'interrogation à la SLF (Etape S4).
